# EUROPEAN PATENT SPECIFICATION

(11) **EP 3 387 022 B1**
(45) Date of publication and mention of the grant of the patent: **29.04.2020**
(21) Application number: 16806076.2
(22) Date of filing: 05.12.2016
(51) Int. Cl.: C08F 2/00, C08F 2/06, C08F 2/12, C08F 2/38, C08F 136/06, C08L 9/00

(54) **METHOD FOR THE PREPARATION OF HYDROXYLATED POLYOLEFINS**
VERFAHREN ZUR HERSTELLUNG VON HYDROXYLIERTEN POLYOLEFINEN
PROCÉDÉ POUR LA PRÉPARATION DE POLYOLÉFINES HYDROXYLÉES

(30) Priority: 08.12.2015 EP 15198383
(43) Date of publication of application: 17.10.2018
(73) Proprietor: Evonik Operations GmbH, 45128 Essen (DE)
(72) Inventor: COUET, Julien, 64295 Darmstadt (DE); SCHWARZ, Markus, 45721 Haltern am See (DE); STERZEL, Walter, 45770 Marl (DE)
(74) Representative: Evonik Patent Association
(86) International application number: PCT/EP2016/079746
(87) International publication number: WO 2017/097702

(56) References cited:
- WO-A1-2014/075901
- US-A1- 2004 236 167

## Description

The invention relates to a process for the preparation of hydroxylated polyolefins by living anionic polymerization of olefin monomers and subsequent functionalization with hydroxyl groups. With the inventive method, a high degree of functionalization can be achieved.

Living anionic polymerizations is a well-known method for the polymerization of vinyl group containing monomers using anionic initiators [Baskaran, D. and Müller, A. H. E. (2009) Anionic Vinyl Polymerization, in Controlled and Living Polymerizations: From Mechanisms to Applications (eds A. H. E. Müller and K. Matyjaszewski), Wiley-VCH Verlag GmbH & Co. KGaA, Weinheim, Germany]. The term *living* refers to the fact that the polymerization generates polymer chains with stable carbanionic chain ends that retain their reactivity for a sufficient amount of time, thus enabling continued propagation without termination and transfer reactions. Because of the absence of termination and transfer reactions, each initiator molecule produces one living polymer chain. If the initiator is sufficiently reactive, the rate of initiation will be faster than the rate of chain propagation, and as a consequence, polymers with a narrow molecular weight distribution can be obtained. Due to the stability of the carbanionic chain and, the polymer chains can be functionalized with a diverse array of functional end groups by reaction with a variety of electrophilic reagents. Living anionic polymerization thus allows for the synthesis of well-defined, chain-end functionalized polymers with low degrees of compositional heterogeneity.

The synthesis of polybutadiene by living anionic polymerization of 1,3-butadiene using n-butyllithium as initiator is, for example, described in WO 2014/075901 A1. By reaction of the carbanionic polybutadiene chain end with an epoxide such as propylene oxide, the polymer can be functionalized with a single hydroxyl group, yielding a mono-hydroxylated polybutadiene, which is of particular industrial importance. For some applications, the resulting mono hydroxylated polybutadiene can further be hydrogenated to produce a fully saturated, long chain monoalcohol. A process for the preparation of a fully saturated monohydroxy-polybutadiene is, for example, described in WO 2015/040095 A1.

One difficulty of this manufacturing process is to maximize the yield of functionalized polymer. Electrophilic reactants other than the epoxide group, such as for example acidic protons on the methyl substituent of propylene oxide, may react with the strongly basic carbanion of the living polymer chain to produce non-functionalized polymer ends (Quirk, R. P., & Gomochak, D. L. (2003). Recent advances in anionic synthesis of chain-end functionalized elastomers using epoxides and related compounds, Rubber chemistry and technology, 76(4), 812-831). This results in a reduction of the yield of functionalized polymer. Little attention has been paid to this problem in the prior art. In particular, known methods rarely reach high functionalization values of 95% or higher.

The present invention, therefore, aims to provide a method for the preparation of hydroxylated polyolefins with a high degree of hydroxyl-functionalization, preferably a degree of functionalization of more than 98%, even more preferably more than 99%. Here, the degree of functionalization refers to the number of polymer chains bearing a hydroxyl group relative to the total number of polymer chains.

To solve this problem, the present invention has found that the degree of functionalization of polyolefins can be controlled by the polymerization temperature, the molar ratio of polar solvent to anionic initiator, and the amount of olefin in the reaction mixture.

The present invention, therefore, relates to a method for the preparation of a hydroxylated polyolefin by living anionic polymerization comprising the steps of:
a) providing a reaction mixture comprising:
   a diene,
   a polar solvent, which is an aprotic solvent comprising at least one oxygen, sulfur or nitrogen atom,
   a non-polar solvent, which is a hydrocarbon solvent, and
   an anionic initiator;
b) allowing the reaction mixture to polymerize; and
c) terminating the polymerization by addition of an epoxide;
characterized in that
the polymerization is carried out at a temperature of 50°C or less,
the molar ratio of polar solvent to anionic initiator is 3 or less, and
the amount of diene in the reaction mixture is 40 wt-% or less, based on the total weight of the reaction mixture,
wherein the diene is selected from the group consisting of 1,3-butadiene, 1,3-pentadiene, 2,3-dimethylbutadiene, phenylbutadiene, isoprene, or mixtures thereof.

In some embodiments, the method may further comprise a step of hydrogenating the hydroxylated polyolefin.

In some embodiments, the polar solvent may be selected from the group consisting of diethyl ether, dimethyl ether, tetrahydrofuran, 3-methyl-tetrahydrofuran, ethyl acetate, acetone, dimethylformamide, acetonitrile, dimethyl sulfoxide, nitromethane, propylene carbonate, tetramethylethylenediamine, pentamethyldiethylenetriamine, hexamethylphosphortriamide, and mixtures thereof.

In some embodiments, the non-polar solvent may be selected from hydrocarbons with 5 to 10 carbon atoms, and mixtures thereof.

In some embodiments, the anionic initiator may be an alkyllithium.

In some embodiments, the epoxide may be an alkylene oxide with 2 to 10 carbon atom, or a mixture thereof.

In some embodiments, the polymerization may be carried out at a pressure in the range of 1 to 100 bar.

In some embodiments, the polymerization may be carried out at a temperature in the range of 10°C to 50°C.

In some embodiments, the molar ratio of polar solvent to anionic initiator may be in the range of 0.5 to 3.

In some embodiments, the amount of diene in the reaction mixture is in the range of 5 to 40 wt-%, based on the total weight of the reaction mixture.

By setting the polymerization temperature, the molar ratio of polar solvent to anionic initiator, and the amount of diene in the reaction mixture within the specified ranges, a degree of functionalization of the resulting polymer of more than 98,0%, preferably more than 99% can be achieved.

In a particularly preferred embodiment, the diene is 1,3-butadiene.

The inventive method is carried out in a reaction mixture comprising at least one non-polar solvent and at least one polar solvent. The weight ratio of non-polar to polar solvent in the reaction mixture may preferably be within the range of 1 to 50, more preferably 15 to 50, most preferably 30 to 45.

For the purpose of the present invention, a polar solvent is defined as a solvent having a dielectric constant (relative permittivity) of at least 4 measured at 20°C. A non-polar solvent is defined as a solvent having a dielectric constant of less than 4 at 20°C. Here, the dielectric constant of a given solvent is the ratio of the capacitance of a capacitor using that solvent as a dielectric, compared to a capacitor that has vacuum as its dielectric.

The polar solvent is an aprotic solvent, which comprises at least one oxygen, sulfur or nitrogen atom. Suitable polar solvents are, for example, diethyl ether, dimethyl ether, tetrahydrofuran, 3-methyl-tetrahydrofuran, ethyl acetate, acetone, dimethylformamide, acetonitrile, dimethyl sulfoxide, nitromethane and propylene carbonate.

In a preferred embodiment, the polar solvent is an aprotic heteroaliphatic solvent. Suitable aprotic heteroaliphatic solvents are, for example, tertiary amines, such as pentamethyldiethylenetriamine (PMDETA), and ethers, such as diethyl ether or tetrahydrofuran (THF). In a preferred embodiment, the polar solvent is selected from the group consisting of tetrahydrofuran, 3-methyl-tetrahydrofuran, dimethyl ether, diethyl ether, pentamethyldiethylenetriamine or mixtures thereof. Most preferably, the polar solvent is tetrahydrofuran.

The amount of polar aprotic solvent in the reaction mixture is preferably 0.1 to 10 wt-%, more preferably 0.5 to 5 wt-%, most preferably 0.75 to 5 wt-%, based on the total weight of the reaction mixture.

The non-polar solvents are hydrocarbon solvents, such as for example, pentane, hexane, heptane, cyclopentane, cyclohexane, benzene, and toluene. The non-polar solvent is preferably a hydrocarbon having 5 to 10 carbon atoms, preferably an alkane or cycloalkane with 5 to 10 carbon atoms, more preferably hexane, heptane, cyclohexane, or mixtures thereof, and most preferably cyclohexane. The amount of non-polar solvent in the reaction mixture is preferably 40 to 90 wt-%, more preferably 30 to 85 wt-%, most preferably 50 to 80 wt-%, based on the total weight of the reaction mixture.

In a preferred embodiment the polar solvent is tetrahydrofuran and the non-polar solvent is cyclohexane.

Anionic initiators suitable for the inventive method can be broadly classified into radical anions such as sodium naphtalenide, carbanions such as alkyllithiums, and oxyanions, including their thio derivatives. For example, organometallic compounds of branched or linear alkyls or aryls, which can be substituted or unsubstituted, and alkali or alkaline earth metals, preferably lithium, can be used.

Suitable initiators are, for example, sodium naphtalenide, the reaction product of an alkali metal and 1,1-diphenylethylene, the reaction product of an alkali metal with alpha-methylstyrene, sec-butyllithium, n-butyllithium, tert-butyllithium, fluoernyllithium, alpha-methylstyryllithium, 1,1-diphenylhexyllithium, diphenylmethyllithium, -sodium, or-potassium, 1,1-diphenyl-3-methylpentyllithium, 1,1,4,4-tetraphenyl-1,4-dilithium butane, and 1,1,4,4-tetraphenyl-1,4-disodium butane.

Alkyllithiums are preferred initiators for the inventive method, in particular in combination with tetrahydrofuran as polar solvent. A particularly preferred alkyllithium is n-butyllithium.

The epoxide added to the reaction mixture reacts with the carbanionic end of the living polymer chain to yield a polymer end functionalized with an oxyanion. To prevent a premature termination of the polymerization, the epoxide is preferably added to the reaction mixture after all dienes and other monomers have been incorporated into polymer chains. Epoxides for use in the present invention may also be referred to as alkylene oxides. Preferably, alkylene oxides with 2 to 10 carbon atoms are used. Suitable epoxides are, for example, ethylene oxide, propylene oxide, 1-butene oxide, or mixtures thereof. In preferred embodiment, ethylene oxide is used as epoxide.

To convert the oxyanion to a hydroxyl group to yield the mono-hydroxylated polydiene, the oxyanion may be reacted with a weakly acidic compound, such as an aqueous solution containing a acid, e.g. H₂SO₄, or an alcohol. In a preferred embodiment, a low molecular weight alcohol is added to the reaction mixture after the termination step, to convert the oxyanion to a hydroxyl group. Suitable low molecular weight alcohols are, for example, monoalcohols having 1 to 6 carbon atoms, in particular methanol.

In the case a lithium compound is used as anionic initiator, the reaction of the oxyanion with the low molecular weight alcohol yields a lithium alcoholate that precipitates from the reaction mixture and can be removed by filtration before subsequent reactions, such as hydrogenation, are carried out on the hydroxylated polydiene.

To recover the final hydroxylated polydiene, solvent may be evaporated.

The inventive method is particularly suited to prepare hydroxylated, fully saturated polyolefins. To this end, the method preferably further comprises hydrogenating the hydroxylated polyolefin. A process for hydrogenating a hydroxylated polyolefin is, for example, described in WO 2015/040095 A1.

The pressure, at which the polymerization is carried out, is not particularly limited. Preferably, a pressure is selected at which the diene is present as a non-supercritical liquid. In a preferred embodiment, the polymerization is carried out at a pressure in the range of 1 to 100 bar, more preferably 2 to 50 bar, most preferably 5 to 20 bar.

Moreover, the polymerization is preferably carried out for a duration in the range of 30 minutes to 4 hours, more preferably 1 to 3 hours, most preferably 1 to 2 hours. In this context, the onset of polymerization is defined as the point, at which the anionic initiator is added to the reaction mixture. The end of the polymerization is defined as the point, at which the epoxide is added to terminate polymerization.

Selecting a polymerization temperature of 50°C or less is essential for the present invention, since it allows increasing the degree of functionalization to above 99%. Preferably, the polymerization temperature is in the range of 10°C to 50°C, more preferably in the range of 15 to 45°C, most preferably in the range of 25 to 40°C.

Selecting a molar ratio of polar solvent to anionic initiator of 3 or less is likewise essential to increase the degree of functionalization to above 99%. The molar ratio is calculated on the basis of the total amounts of anionic initiator and polar solvent added to the reaction. Preferably, the molar ratio is within the range of 0.5 to 3, more preferably 1 to 2, most preferably 1.25 to 1.75.

Limiting the amount of olefin in the reaction mixture to 40 wt-% or less, based on the total weight of the reaction mixture, is another essential feature for increasing the degree of functionalization to above 98,0%, preferably to more than 99%. Preferably, the amount of olefin in the reaction mixture is in the range of 5 to 40 wt-%, more preferably 10 to 35 wt-%, most preferably 15 to 30 wt-%. Here, again, the amount of olefin is based on the total weight of the reaction mixture.

In one embodiment, the reaction mixture comprises 1,3-butadiene, tetrahydrofuran, cyclohexane, and butyllithium, wherein the amount of 1,3-butadiene in the reaction mixture is 40 wt-% or less, and the molar ratio of tetrahydrofuran to butyllithium is 3 or less. In this embodiment, ethylene oxide or propylene oxide are preferably added to terminate the polymerization, preferably followed by addition of an alcohol having 1 to 6 carbon atoms, e.g. methanol, to produce the hydroxylated polydiene. Preferably, the reaction mixture in this embodiment consists of 1,3-butadiene, tetrahydrofuran, cyclohexane, and butyllithium.

The following examples illustrate the present invention.

### EXAMPLES

Molecular weights Mn and PDI of the products were determined via GPC against polystyrene standard by multiplying the resulting Mn with "Benoit factor" of 0.67 for polyisoprenes under the following conditions:

| | | | |
|---|---|---|---|
| Concentration: | 1.0 g/l | Injection volume: | 20.0 µl |
| Temperature: | 40 °C | Eluent: | THF |
| Flow rate: | 0.30 ml/min | Column: | PSS SDV 5 µm |

The amounts of 1,2-, 3,4- and 1,4-linkages were determined by ¹H-NMR with CDCl₃ as an internal standard.

The content of OH functionalities was determined against non-OH-functionalized standard via HPLC.

### Examples 1-11. Anionic polymerization of 1,3-butadiene

Anionic polymerization of 1,3-butadiene in a mixture of cyclohexane and tetrahydrofuran in the presence of n-butyllithium (BuLi) was carried out according to the following protocol.

In a typical anionic polymerization reaction, the full amount of cyclohexane was added first into a 5 I steel reactor mechanically agitated (intermig® impeller). The solvent was then gently mixed and tetrahydrofuran (THF) was added. Next n-butyllithium (BuLi) was added to form a Li-complex with the THF (slightly exothermic reaction). The temperature within the vessel increased from 22 °C to 25 °C (pressure 1 bar). After homogenization, the valve for 1,3-butadiene was opened and the starting material was allowed to flow into the reactor. As soon as the monomer entered the solution, the polymerization started (very exothermic reaction). The temperature profile increased up to the desire temperature that was then maintained by activation of a water cooling system. The pressure increased to 6 bar. Butadiene dosing generally lasted 1 hour. Once the full amount of Butadiene was added the polymer solution was let to cool down to 22 °C. The functionalization was realized by the addition of propylene oxide in THF under 6 bar (slightly exothermic reaction) providing a macroalcoholate. Finally, the alcohol was gained by the addition of methanol at room temperature and under atmospheric pressure. During this last step, lithium methanolate salt was created and subsequently removed.

The OH functionality of the polymer was determined using an HPLC method using a light-scattering detector, where the tested samples were measured against a calibration curve.

Several trials were carried out with varying diene concentration, THF to BuLi molar ratios, and polymerization temperature. The composition of the reaction mixture for each example are given in Table 1.

The results of these trials are summarized in Table 2.

**Table 1:**

| Example | Cyclohexane concentration in wt-% | Tetrahydrofuran concentration in wt-% | Butyllithium (20% in CHX) concentration in wt-% | Diene concentration in wt-% |
|---|---|---|---|---|
| 1 | 45 | 1 | 4 | 50 |
| 2 | 45 | 1 | 4 | 50 |
| 3 | 44 | 2 | 4 | 50 |
| 4 | 43 | 3 | 4 | 50 |
| 5 | 45 | 1 | 4 | 50 |
| 6 | 56 | 1 | 3 | 40 |
| 7 | 66 | 1 | 3 | 30 |
| 8 | 66 | 1 | 3 | 30 |
| 9 | 63 | 4 | 3 | 30 |
| 10 | 82 | 1 | 2 | 15 |
| 11 | 66 | 1 | 3 | 30 |

**Table 2:**

| Example | Diene concentration in wt-% | Molar ratio of THF to BuLi | Polymerization temperature in °C | Degree of functionalization in % |
|---|---|---|---|---|
| 1 (CE) | 50 | 1.5 | 55 | 94 |
| 2 (CE) | 50 | 1.5 | 30 | 96 |
| 3 (CE) | 50 | 3 | 55 | 96 |
| 4 (CE) | 50 | 4.5 | 55 | 93.5 |
| 5 (CE) | 50 | 1.5 | 40 | 97 |
| 6 (CE) | 40 | 1.5 | 55 | 97 |
| 7 (CE) | 30 | 1.5 | 55 | 98 |
| 8 | 30 | 1.5 | 40 | 99.5 |
| 9 (CE) | 30 | 6.0 | 55 | 96 |
| 10 | 15 | 1.5 | 40 | 99 |
| 11 | 30 | 1.5 | 30 | 99.5 |

| | | | | |
|---|---|---|---|---|
| CE: comparative examples (parameter values falling outside the inventive ranges are underscored) | | | | |

These results demonstrate that each of the three reaction conditions, i.e. diene concentration, molar ratio of THF to BuLi, and polymerization temperature may be controlled to increase the degree of functionalization. This is demonstrated for the diene concentration by comparing examples 1 and 7, for the molar ratio of THF to BuLi by comparing examples 3 and 4, and for the polymerization temperature by comparing examples 1 and 5.

However, it is clear from the results of table 2, that a degree of functionalization of 99% or more can only be achieved by a combination of a diene concentration, a molar ratio of THF to BuLi, and a polymerization temperature according to the present invention (*cf*. examples 8, 10, and 11).

### Example 12. Anionic polymerization of isoprene

Anionic polymerization of isoprene was performed by charging a water- and oxygen-free 5 I autoclave with 2195 g cyclohexane (purified over molecular sieves), 6.2 g tetrahydrofuran (THF) and 32.3 g n-butyl lithium solution (2.0 M in cyclohexane). Under vigorous stirring at T = 40 °C and p = 3.1 bar, 402 g isoprene (purified over molecular sieves and alumina) were added at a rate of 800 g/h, yielding a final pressure of 3.9 bar. Under these conditions, the reaction mixture was stirred further for 20 min, followed by cooling of the reaction mixture to T = 20 °C and subsequent addition of 7.1 g propylene oxide in three portions at p = 1.3 bar. The reaction mixture was stirred at T = 20 °C and p = 7.7 bar for 1 h after which 31.4 g methanol were added at T = 20 °C and p = 1 bar. After 30 min, the mixture was filtered using 120 g Arbocell® FIC200 filtration aid, followed by evaporation of the volatile solvents.

The obtained monohydroxypolyisoprene (clear, colorless liquid) had the following properties:
Mn = 4.2 kg/mol;
PDI = 1.06;
1,2-content = 1.8%;
3,4-content = 38.0%;
1,4-content = 60.1%;
degree of functionalization = 99.5%.

The reaction conditions of the Example 12 are summarized in Tables 3 and 4:

**Table 3**

| Example | Cyclohexane concentration in wt-% | Tetrahydrofuran concentration in wt-% | Butyllithium (20% in CHX) concentration in wt-% | Diene concentration in wt-% |
|---|---|---|---|---|
| 12 | 83.3 | 0.2 | 1.2 | 15.2 |

**Table 4**

| Example | Diene concentration in wt-% | Molar ratio of THF to BuLi | Polymerization temperature in °C | Degree of functionalization in % |
|---|---|---|---|---|
| 12 | 15.2 | 1.01 | 40 | 99.5 |

Example 12 confirms that the method of the present invention also allows achieving a degree of functionalization of over 99% with substituted dienes such as isoprene.

## Claims

1. A method for the preparation of a hydroxylated polyolefin by living anionic polymerization comprising the steps of:
a) providing a reaction mixture comprising:
a diene,
a polar solvent which is an aprotic solvent comprising at least one oxygen, sulfur or
nitrogen atom,
a non-polar solvent, which is a hydrocarbon solvent, and
an anionic initiator;
b) allowing the reaction mixture to polymerize; and
c) terminating the polymerization by addition of an epoxide;
**characterized in that**
the polymerization is carried out at a temperature of 50°C or less,
the molar ratio of polar solvent to anionic initiator is 3 or less, and
the amount of diene in the reaction mixture is 40 wt-% or less, based on the total weight of the reaction mixture,
wherein the diene is selected from the group consisting of 1,3-butadiene, 1,3-pentadiene, 2,3-dimethylbutadiene, phenylbutadiene, isoprene, or mixtures thereof.

2. The method according to claim 1, further comprising hydrogenating the hydroxylated polyolefin.

3. The method according to claim 1, **characterized in that** the diene is 1,3-butadiene.

4. The method according to any one of claims 1 to 3, **characterized in that** the polar solvent is selected from the group consisting of diethyl ether, dimethyl ether, tetrahydrofuran, 3-methyl-tetrahydrofuran, ethyl acetate, acetone, dimethylformamide, acetonitrile, dimethyl sulfoxide, nitromethane, propylene carbonate, tetramethylethylenediamine, pentamethyldiethylenetriamine, hexamethylphosphortriamide, and mixtures thereof.

5. The method according to any one of claims 1 to 4, **characterized in that** the non-polar solvent is selected from hydrocarbons with 5 to 10 carbon atoms, and mixtures thereof.

6. The method according to any one of claims 1 to 5, **characterized in that** the anionic initiator is an alkyllithium.

7. The method according to any one of claims 1 to 6, **characterized in that** the epoxide is an alkylene oxide with 2 to 10 carbon atom, or a mixture thereof.

8. The method according to any one of claims 1 to 7, **characterized in that** the polymerization is carried out at a pressure in the range of 1 to 100 bar.

9. The method according to any one of claims 1 to 8, **characterized in that** the polymerization is carried out at a temperature in the range of 10°C to 50°C.

10. The method according to any one of claims 1 to 9, **characterized in that** the molar ratio of polar solvent to anionic initiator is in the range of 0.5 to 3.

11. The method according to any one of claims 1 to 10, **characterized in that** the amount of diene in the reaction mixture is in the range of 5 to 40 wt-%, based on the total weight of the reaction mixture.

## Patentansprüche

1. Verfahren zur Herstellung eines hydroxylierten Polyolefins durch lebende anionische Polymerisation, das folgende Schritte umfasst:
a) Bereitstellen einer Reaktionsmischung, umfassend:
ein Dien,
ein polares Lösungsmittel, bei dem es sich um ein aprotisches Lösungsmittel mit mindestens einem Sauerstoff-, Schwefel- oder Stickstoffatom handelt,
ein unpolares Lösungsmittel, bei dem es sich um ein Kohlenwasserstofflösungsmittel handelt, und
einen anionischen Initiator;
b) Polymerisierenlassen der Reaktionsmischung und
c) Abbrechen der Polymerisation durch Zugabe eines Epoxids;
**dadurch gekennzeichnet, dass**
die Polymerisation bei einer Temperatur von 50 °C oder weniger durchgeführt wird,
das Molverhältnis von polarem Lösungsmittel zu anionischem Initiator 3 oder weniger beträgt und die Dienmenge in der Reaktionsmischung 40 Gew.-% oder weniger, bezogen auf das Gesamtgewicht der Reaktionsmischung, beträgt,
wobei das Dien aus der Gruppe bestehend aus 1,3-Butadien, 1,3-Pentadien, 2,3-Dimethylbutadien, Phenylbutadien, Isopren oder Mischungen davon ausgewählt wird.

2. Verfahren nach Anspruch 1, ferner umfassend die Hydrierung des hydroxylierten Polyolefins.

3. Verfahren nach Anspruch 1, **dadurch gekennzeichnet, dass** es sich bei dem Dien um 1,3-Butadien handelt.

4. Verfahren nach einem der Ansprüche 1 bis 3, **dadurch gekennzeichnet, dass** das polare Lösungsmittel aus der Gruppe bestehend aus Diethylether, Dimethylether, Tetrahydrofuran, 3-Methyltetrahydrofuran, Essigsäureethylester, Aceton, Dimethylformamid, Acetonitril, Dimethylsulfoxid, Nitromethan, Propylencarbonat, Tetramethylethylendiamin, Pentamethyldiethylentriamin, Hexamethylphosphortriamid und Mischungen davon ausgewählt wird.

5. Verfahren nach einem der Ansprüche 1 bis 4, **dadurch gekennzeichnet, dass** das unpolare Lösungsmittel aus Kohlenwasserstoffen mit 5 bis 10 Kohlenstoffatomen und Mischungen davon ausgewählt wird.

6. Verfahren nach einem der Ansprüche 1 bis 5, **dadurch gekennzeichnet, dass** es sich bei dem anionischen Initiator um ein Alkyllithium handelt.

7. Verfahren nach einem der Ansprüche 1 bis 6, **dadurch gekennzeichnet, dass** es sich bei dem Epoxid um ein Alkylenoxid mit 2 bis 10 Kohlenstoffatomen oder eine Mischung davon handelt.

8. Verfahren nach einem der Ansprüche 1 bis 7, **dadurch gekennzeichnet, dass** die Polymerisation bei einem Druck im Bereich von 1 bis 100 bar durchgeführt wird.

9. Verfahren nach einem der Ansprüche 1 bis 8, **dadurch gekennzeichnet, dass** die Polymerisation bei einer Temperatur im Bereich von 10 °C bis 50 °C durchgeführt wird.

10. Verfahren nach einem der Ansprüche 1 bis 9, **dadurch gekennzeichnet, dass** das Molverhältnis von polarem Lösungsmittel zu anionischem Initiator im Bereich von 0,5 bis 3 liegt.

11. Verfahren nach einem der Ansprüche 1 bis 10, **dadurch gekennzeichnet, dass** die Dienmenge in der Reaktionsmischung im Bereich von 5 bis 40 Gew.-%, bezogen auf das Gesamtgewicht der Reaktionsmischung, liegt.

## Revendications

1. Procédé pour la préparation d'une polyoléfine hydroxylée par polymérisation anionique vivante comprenant les étapes de :
a) mise à disposition d'un mélange réactionnel comprenant :
un diène,
un solvant polaire qui est un solvant aprotique comprenant au moins un atome d'oxygène, de soufre ou d'azote,
un solvant non polaire, qui est un solvant hydrocarboné, et
un initiateur anionique ;
b) le fait de laisser le mélange réactionnel polymériser ; et
c) terminaison de la polymérisation par ajout d'un époxyde ;
**caractérisé en ce que**
la polymérisation est mise en œuvre à une température de 50 °C ou moins,
le rapport molaire du solvant polaire à l'initiateur anionique étant de 3 ou moins, et
la quantité de diène dans le mélange réactionnel étant de 40 % en poids ou moins, sur la base du poids total du mélange réactionnel,
le diène étant choisi dans le groupe constitué par le 1,3-butadiène, le 1,3-pentadiène, le 2,3-diméthylbutadiène, le phénylbutadiène, l'isoprène, ou des mélanges correspondants.

2. Le procédé selon la revendication 1, comprenant en outre l'hydrogénation de la polyoléfine hydroxylée.

3. Le procédé selon la revendication 1, **caractérisé en ce que** le diène est le 1,3-butadiène.

4. Le procédé selon l'une quelconque des revendications 1 à 3, **caractérisé en ce que** le solvant polaire est choisi dans le groupe constitué par le diéthyléther, le diméthyléther, le tétrahydrofuranne, le 3-méthyl-tétrahydrofuranne, l'acétate d'éthyle, l'acétone, le diméthylformamide, l'acétonitrile, le diméthylsulfoxyde, le nitrométhane, le carbonate de propylène, la tétraméthyléthylènediamine, la pentaméthyldiéthylènetriamine, l'hexaméthylphosphorotriamide, et des mélanges correspondants.

5. Le procédé selon l'une quelconque des revendications 1 à 4, **caractérisé en ce que** le solvant non polaire est choisi parmi des hydrocarbures comportant 5 à 10 atomes de carbone, et des mélanges correspondants.

6. Le procédé selon l'une quelconque des revendications 1 à 5, **caractérisé en ce que** l'initiateur anionique est un alkyllithium.

7. Le procédé selon l'une quelconque des revendications 1 à 6, **caractérisé en ce que** l'époxyde est un oxyde alkylène comportant 2 à 10 atomes de carbone, ou un mélange correspondant.

8. Le procédé selon l'une quelconque des revendications 1 à 7, **caractérisé en ce que** la polymérisation est mise en œuvre à une pression dans la plage de 1 à 100 bar.

9. Le procédé selon l'une quelconque des revendications 1 à 8, **caractérisé en ce que** la polymérisation est mise en œuvre à une température dans la plage de 10 °C à 50 °C.

10. Le procédé selon l'une quelconque des revendications 1 à 9, **caractérisé en ce que** le rapport molaire du solvant polaire à l'initiateur anionique se situe dans la plage de 0,5 à 3.

11. Le procédé selon l'une quelconque des revendications 1 à 10, **caractérisé en ce que** la quantité de diène dans le mélange réactionnel se situe dans la plage de 5 à 40 % en poids, sur la base du poids total du mélange réactionnel.
